## Europäisches Patentamt
## European Patent Office
## Office européen des brevets

(19)

(11) Veröffentlichungsnummer: **0 178 478**
**B1**

(12)

# EUROPÄISCHE PATENTSCHRIFT

(45) Veröffentlichungstag der Patentschrift: 23.01.91

(51) Int. Cl.⁵: **A 23 G 3/00**

(21) Anmeldenummer: 85111779.6

(22) Anmeldetag: 18.09.85

(54) **Gummi-oder Geleesüssware.**

(30) Priorität: 19.09.84 DE 3434283

(43) Veröffentlichungstag der Anmeldung:
23.04.86 Patentblatt 86/17

(45) Bekanntmachung des Hinweises auf die
Patenterteilung:
23.01.91 Patentblatt 91/04

(84) Benannte Vertragsstaaten:
AT BE CH DE FR GB IT LI LU NL SE

(56) Entgegenhaltungen:
EP-A-0 017 185
EP-A-0 053 985
FR-A- 618 826
FR-A-2 317 883
US-A-2 886 446
US-A-2 965 493
US-A-3 206 315
US-A-4 251 548

(73) Patentinhaber: **Deutsche Gelatine-Fabriken Stoess AG**
**Postfach 100 Gammelsbacher Strasse 2**
**D-6930 Eberbach (DE)**

(72) Erfinder: **Schrieber, Reinhard**
**Steingartenweg 21**
**D-6930 Eberbach (DE)**
Erfinder: **Hoffmann, Peter**
**Sitzbuchweg 17**
**D-6900 Heidelberg-Ziegelhausen (DE)**
Erfinder: **Bräumer, Klaus, Dr.**
**Allensteiner Strasse 6**
**D-6930 Eberbach (DE)**

(74) Vertreter: **Hoeger, Stellrecht & Partner**
**Uhlandstrasse 14 c**
**D-7000 Stuttgart 1 (DE)**

## Beschreibung

Die Erfindung betrifft eine Gunni- oder Geleesüßware mit einem Gehalt an Geliermittel, Zucker oder Süßstoff, Aroma- und gegebenenfalls Farbstoff.

Bekannte Süßwaren dieser Art enthalten in der Regel zwischen 70 und 100 Gew.-% Kohlehydrat. Dieser hohe Kohlehydratanteil kann bei übermäßigem Verzehr solcher Süßwaren zu gesundheitlichen Schäden führen.

An sich ist es erwünscht, insbesondere in Entwicklungsländern, eiweißreiche Nahrung verfügbar zu haben.

Eine Gummi- oder Geleesüßware, die in ihrem Kohlehydratanteil reduziert, dafür aber eiweißangereichert ist, wäre an sich eine sinnvolle Ernährungsquelle.

Die bekannten Gummi- oder Geleesüßwaren, die außer Gelatine etwa 7 Gew.-% Joghurtpulver enthalten können, sind trübe und zum Teil in ihrer Textur stark verändert.

Die typische Konsistenz dieser Süßwaren wird durch den Gehalt an Gelatine bewirkt, der zwischen 6 und 12 Gew.-%, bezogen auf die Trockensubstanz, betragen kann. Versuche, Süßwaren der genannten Art neben ihrem Gelatinegehalt zusätzlich mit anderen Proteinen anzureichern, haben ergeben, daß dies maximal nur bis zu einem Anteil von 10 Gew.-% möglich ist. Ein größerer Anteil an Eiweiß ist wegen deren spezifischen Eigenschaften nicht möglich.

So führt insbesondere ein höherer Proteineinsatz zu Verbrennungsrückständen, zu Trübungen und zu extremen Verfärbungen, welche die Süßware ungenießbar machen. Darüber hinaus werden der Geschmack und die Textur der Gummi- und Geleesüßware sehr stark negativ beeinflußt, so daß diese Produkte nicht mehr den Verbrauchererwartungen entsprechen und auf dem Markt nicht absetzbar sind.

Ein weiterer technologischer Nachteil beim Einsatz höherer Eiweißgehalte in Süßwaren ist das gleichzeitige Miteinbringen höherer Wasseranteile in die Rezeptur. Eine Trocknung solcher Süßwarenprodukte ist dann nur unter extrem schwierigen technischen Umständen durchzuführen. Es ergeben sich beispielsweise sehr lange Trocknungszeiten, die unwirtschaftlich sind.

Einen höheren Proteinanteil ohne Erhöhung des Wassergehaltes könnte man grundsätzlich durch den Einsatz von Proteinhydrolysaten erreichen. Bei Verwendung von Proteinhydrolysaten zeigen sich aber die gleichen Nachteile wie bei nichthydrolysierten Eiweißstoffen. Beim Kochen des Zuckeransatzes treten infolge der Maillard-Reaktion sehr starke Verfärbungen von Dunkelbraun bis fast Schwarz auf. Desgleichen kommt es zu starken Trübungen und Verbrennungsrückständen. Im übrigen sind übliche Proteinhydrolysate nicht klar in Wasser löslich, so daß sie für Gummi- oder Geleesüßwaren bereits deswegen nicht einsetzbar sind. Schließlich sieht man sich bei Verwendung von Eiweißhydrolysaten immer dem Problem der Bitterpeptide gegenübergestellt, deren unangenehmer Geschmack auch bei Überdosierung mit Aromastoffen nicht überdeckt werden kann. Aus allen diesen Gründen konnten bisher keine Eiweiß- oder Proteinhydrolysate in Gummi- und Geleesüßwaren eingesetzt werden.

Aufgabe der Erfindung ist es, in einer Gummi- oder Geleesüßware den Anteil der Kohlehydrate erheblich zu reduzieren und durch Eiweißstoffe zu ersetzen, ohne daß dabei die typischen Eigenschaften einer solchen Süßware nachteilig beeinflußt werden.

Die Aufgabe wird erfindungsgemäß durch einen Anteil an Kohlehydrat zwischen 15 und 70 Gew.-% und an in Wasser klar löslichem Proteinhydrolysat, aus tierischem Bindegewebe hergestellt, zwischen 10 und 50 Gew.-% gelöst.

Es wurde gefunden, daß sich aus tierischem Bindegewebe Proteinhydrolysate gewinnen lassen, die in Wasser klar löslich sind und keine Bitterpeptide enthalten.

Man gewinnt solche für Gummi- oder Geleesüßwaren brauchbare Proteinhydrolysate aus Gelatine, die ihrerseits in herkömmlicher Weise aus Schweineschwarten und/oder Rinderspalt hergestellt wird. Die Gelatine wird zwischen 40 und 90 °C hydrolysiert, wobei Enzyme eingesetzt werden können. Das so gewonnene Hydrolysat wird durch Filtrierprozesse gereinigt, um geschmacksbeeinträchtigende Stoffe, einschließlich Bitterpeptide, abzutrennen. Schließlich erfolgt eine Sprühtrocknung des Hydrolysats zu Pulver. Dieses Pulver löst sich in Wasser klar auf, hat keinen Bittergeschmack und führt bei Herstellung der Süßware nicht zu Verbrennungsrückständen, Trübungen oder Verfärbungen, und zwar auch dann nicht, wenn bis zu 50 Gew.-% Proteinhydrolysat eingesetzt wird. Auch die Textur und der Geschmack der Gummi- oder Geleesüßware werden überraschenderweise nicht verändert.

Weiterhin haben sich bei einem Anteil von 10 bis 50 Gew.-% am Proteinhydrolysat, welches aus tierischem Bindegewebe gewonnen war, überraschenderweise verschiedene technologische Vorteile ergeben, die bisher nicht ausgenutzt werden konnten. So zeigte es sich, daß durch den Einsatz der genannten Proteinhydrolysate eine Aromaverstärkung sowie eine Verstärkung des Säureeindrucks in der Süßware entsteht. Darüber hinaus zeigen die mit Proteinhydrolysaten der angegebenen Art hergestellten Süßwaren eine höhere Lagerstabilität, die sich darin äußert, daß die Waren gegenüber Temperatur- und Luftfeuchtigkeitsschwankungen unempfindlich sind, eine höhere Schmelzstabilität sowie ein sehr günstiges Austrocknungsverhalten haben.

Es besteht bei der hier beschriebenen Süßware auch nicht die Gefahr, daß bei bestimmten Rezepturzusammensetzungen oder bei ungünstigen Lagerbedingungen Zucker auskristallisiert und die Süßware hierdurch trüb wird und zum Zusammenkleben neigt.

Schließlich bewirkt die bei dem Einsatz der genannten Eiweißhydrolysate aus tierischem Bindegewebe hervorgerufene Viskositätserhöhung der fertigen Süßwaren-Gießmasse eine schnellere Abbindung der Süßware beim Trocknungsvorgang bzw. nach dem Verlassen der Extrusionsdüsen, wodurch kürzere Trocknungszeiten und damit ein höherer Produktdurchsatz erzielbar wird.

An Geliermittel für die Süßware kommen in Frage: Gelatine, Pektin, Agar-Agar, natürliche und/oder modifizierte Stärke, Carraghene, Gummi Arabicum. Als Zucker kann Saccharose, Glukosesirup, Sorbitol Fructose verwendet werden. Ein geeigneter Zuckeraustauschstoff (Süßstoff) ist beispielsweise Lykasin, einzeln oder im Gemisch mit anderen Süßstoffen. An weiteren Zusätzen für die Süßware können eingesetzt werden: Verschiedene Genußsäuren, Aroma- und gegebenenfalls Farbstoffe.

## Patentansprüche

1. Gummi- oder Geleesüßware mit einem Gehalt an Geliermittel, Zucker oder Süßstoff, Aroma- und gegebenenfalls Farbstoff, gekennzeichnet durch einen Anteil an Kohlehydrat zwischen 15 und 70 Gew.-% und an in Wasser klar löslichem Proteinhydrolysat, hergestellt aus tierischem Bindegewebe, zwischen 10 und 50 Gew.-%.

2. Süßware nach Anspruch 1, gekennzeichnet durch einen Anteil des Proteinhydrolysates zwischen 20 und 40 Gew.-%.

3. Süßware nach Anspruch 1, gekennzeichnet durch einen Anteil des Proteinhydrolysates zwischen 25 und 35 Gew.-%.

4. Süßware nach einem der Ansprüche 1 bis 3, gekennzeichnet durch einen Anteil an Kohlehydrat zwischen 20 und 50 Gew.-%.

5. Süßware nach einem der Ansprüche 1 bis 3, gekennzeichnet durch einen Anteil an Kohlehydrat zwischen 30 und 40 Gew.-%.

6. Süßware nach einem der Ansprüche 1 bis 5, dadurch gekennzeichbet, daß sie zusätzlich ein weiteres proteinhydrolysat pflanzlicher und/oder tierischer Herkunft enthält.

7. Süßware nach Anspruch 6, dadurch gekennzeichnet, daß das zusätzliche Proteinhydrolysat aus Milcheiweiß, Milcheiweißbestandteilen, Casein, Molkeneiweiß und/ oder Sojaeiweiß gewonnen ist.

8. Süßware nach einem der voranstehenden Ansprüche, dadurch gekennzeichnet, daß die Proteinhydrolysate Molekulargewichte zwischen 1000 und 100.000, vorzugsweise zwischen 5.000 und 20.000 aufweisen.

9. Süßware nach einem der voranstehenden Ansprüche, dadurch gekennzeichnet, daß das Proteinhydrolysat frei von Bitterpeptiden ist.

## Revendications

1. Confiserie à base de gomme ou de gelée avec une teneur en moyen gélifiant, en sucre ou saccharine, en substance aromatique et éventuellement colorante, caractérisée par une teneur en hydrate de carbone comprise entre 15 et 70 % en poids et en hydrolysat de protéine soluble à l'état clair dans l'eau, réalisé à partir de tissu conjonctif animal, comprise entre 10 et 50 % en poids.

2. Confiserie selon la revendication 1, caractérisée par une teneur en hydrolysat de protéine comprise entre 20 et 40 % en poids.

3. Confiserie selon la revendication 1, caractérisée par une teneur en hydrolysat de protéine comprise entre 25 et 35 % en poids.

4. Confiserie selon l'une des revendications 1 à 3, caractérisée par une teneur en hydrate de carbone comprise entre 20 et 50 % en poids.

5. Confiserie selon l'une des revendications 1 à 3, caractérisée par une teneur en hydrate de carbone comprise entre 30 et 40 % en poids.

6. Confiserie selon l'une des revendications 1 à 5, caractérisée en ce qu'elle contient en supplément un autre hydrolysat de protéine d'origine végétale et/ou animale.

7. Confiserie selon la revendication 6, caractérisée en ce que l'hydrolysat de protéine supplémentaire est obtenu à partir d'albumine de lait, de composants d'albumine de lait, de caséine, d'albumine du lactosérum et/ou d'albumine de soja.

8. Confiserie selon l'une des revendications précédentes, caractérisée en ce que les hydrolysats de protéines présentent des poids moléculaires compris entre 1.000 et 100.000, de préférence entre 5.000 et 20.000.

9. Confiserie selon l'une des revendications précédentes, caractérisée en ce que l'hydrolysat de protéine est exempt de peptides amers.

## Claims

1. Sweet products in the form of a gum or jelly comprising a gelling agent, sugar or sweetener, aroma and optionally colouring matter, characterized by a carbohydrate content between 15 and 70 % by weight and a content between 10 and 50% by weight of protein hydrolysate which dissolves in water to form a clear solution and which is prepared from animal connective tissue.

2. Sweet products as described in Claim 1, characterized by a protein hydrolysate content between 20 and 40% by weight.

3. Sweet products as described in Claim 1, characterized by a protein hydrolysate content between 25 and 35% by weight.

4. Sweet products as described in any one of Claims 1 to 3, characterized by a carbohydrate content between 20 and 50% by weight.

5. Sweet products as described in any one of Claims 1 to 3, characterized by a carbohydrate content between 30 and 40% by weight.

6. Sweet products as described in any one of Claims 1 to 5, characterized in that they additionally contain another protein hydrolysate of plant and/or animal origin.

7. Sweet products as described in Claim 7, characterized in that the additional protein hydrolysate is derived from milk protein, constituents of milk protein, casein, whey protein and/or soya protein.

8. Sweet products as described in any one of the preceding Claims, characterized in that the protein hydrolysates comprise molecular weights between 1,000 and 100,000 and preferably between 5,000 and 20,000.

9. Sweet products as described in any one of the preceding Claims, characterized in that the protein hydrolysate does not contain bitter peptides.

4